# EUROPEAN PATENT SPECIFICATION

(11) **EP 1 992 718 B1**
(45) Date of publication and mention of the grant of the patent: **29.05.2013**
(21) Application number: 07737989.9
(22) Date of filing: 07.03.2007
(51) Int. Cl.: C23C 22/34, C23C 22/44, C23C 22/78, C09D 5/08, C09D 183/08

(54) **METAL SURFACE TREATING AGENT**
METALLOBERFLÄCHENBEHANDLUNGSMITTEL
AGENT DE TRAITEMENT DE SURFACE METALLIQUE

(30) Priority: 08.03.2006 JP 2006062564
(43) Date of publication of application: 19.11.2008
(73) Proprietor: Nippon Paint Co., Ltd., Osaka-shi, Osaka 531-8511 (JP)
(72) Inventor: HASHIMOTO, Aki, Tokyo 140-8675 (JP); YASUDA, Mitsuhiro, 4-1-15, Minamishinagawa, Shinagawa-ku, Tokyo (JP); SHIMAKURA, Toshiaki, Tokyo 140-8675 (JP)
(74) Representative: Gille Hrabal
(86) International application number: PCT/JP2007/054476
(87) International publication number: WO 2007/102557

(56) References cited:
- EP-A1- 1 571 238
- WO-A1-2005/056876
- WO-A2-2004/065642
- JP-A- 2002 332 575
- JP-A- 2004 270 031
- JP-A- 2005 256 070
- US-B1- 6 648 986

## Description

### [Technical Field]

The present invention relates to a surface treating agent for metal that forms a surface-treated film having both high temporary corrosion resistance property and coating adhesion property on a metal surface, such as aluminum, an aluminum alloy, an aluminum die-cast member and the like, without inclusion of toxic hexavalent chromium having been conventionally used, and to a surface treating method for a metal surface.

### [Background Art]

Aluminum has excellent characteristics as metal, such as excellent lightweight property, plastic working property and corrosion resistance property, and good electric and thermal conductivities. It has been known that an alloy of aluminum having copper, magnesium, zinc, silicon, lithium, nickel, chromium, manganese, iron, zirconium or the like added thereto is significantly improved in mechanical properties at ordinary temperature and high temperature, and is imparted with such characteristics as corrosion resistance, wear resistance, low thermal expansion coefficient and the like, through solid solution hardening, work hardening, age hardening or the like. Accordingly, aluminum and an aluminum alloy having these characteristics have been used widely in many fields including those for daily living, such as beverage cans, furniture and interior goods, and also aerospace, automobiles, electric and electronic products, vehicles, boats and ships, civil engineering and construction, and the like.
As one method for working methods of the aluminum material, such as aluminum, an aluminum alloy and the like, a die-casting method has been known, and is being widely used for producing various molded articles.
The die-casting method is such a casting method in that molten metal is injected and charged into a metallic die with a pressing plunger at a high speed (about 20 to 60 m/sec) and a high pressure (about 30 to 200 MPa), followed by solidifying quickly, and has such advantages that a thin cast material having a minimum thickness of about 1 mm can be produced with good dimensional accuracy and good cast surface property at high productivity.
In the die-casting method, in particular, a material to be cast is demanded to have good flowability and charging property into a die, and to be prevented from being deposited to a die, an Al-Si series alloy, an Al-Si-Mg alloy, an Al-Si-Cu alloy, an Al-Si-Cu-Mg alloy and the like based on an Al-Si system are used as an aluminum material.

An aluminum member worked through the die-casting method necessarily suffers segregation of a metallic element added as an alloying element, which accelerates corrosion due to an electrochemical potential difference of heterogeneous metals, and accordingly, a treatment with hexavalent chromate has been often used as a primary antirust treatment and a pretreatment for coating. However, since hexavalent chromate has strong toxicity and may have carcinogenicity, a primary antirust treatment and a pretreatment for coating that use no hexavalent chromate are being used in recent years. For example, there have been disclosed a treating agent containing a chelating agent, and cobalt ion and the like, along with trivalent chromium ion (for example, in Patent Document 1), and a treating agent containing trivalent chromium ion having a heavy metal ion added thereto (for example, in Patent Document 2).
The major component of the treating agents in the Patent Documents is trivalent chromium ion, and the major component constituting the film is chromium oxide containing trivalent chromium, and the target material is zinc plating. Accordingly, it is difficult to apply them to an aluminum die-cast member, which is demanded to have high corrosion resistance.
It is the current situation that such a surface treating method has not been developed that forms a film having high corrosion resistance (i.e., corrosion resistance equivalent to hexavalent chromate treatment) without hexavalent chromium contained.

JP-A-2004 270 031 discloses a surface treatment agent for aluminium containing a fluorozirconium compound, an amidino compound and metal ions. Metal ions that may be added include Al, Ge and Cr(III).

[Patent Document 1] JP-A-2003-268562
[Patent Document 2] JP-A-2003-313675

### [Disclosure of the Invention]

Under the circumstances, the present invention provides a surface treating method and a surface treating agent that form a surface-treated film having both high temporary corrosion resistance property and coating adhesion property on a surface of aluminum, an aluminum alloy or an aluminum die-cast member, without inclusion of toxic hexavalent chromium having been conventionally used.

As a result of earnest investigations made by the inventors with respect to a surface treating method of an aluminum die-cast member capable of solving the problems, it has been found that a surface-treated film having temporary corrosion resistance property and coating adhesion property equivalent to a film containing hexavalent chromium can be formed on an aluminum die-cast member by applying to the target member a surface treating agent having specific pH that contains specific ions, such as at least one metallic ion selected from Zr, Ti and Hf, a trivalent Cr ion and other ions, and an amidino group-containing compound. The present invention has been completed based on the findings.
The present invention provides:
(1) A surface treating agent for metal, containing (a) a fluorine compound of at least one metal selected from Zr, Ti and Hf in an amount of from 1 to 5,000 ppm by mass in terms of metallic ion, (b) a trivalent Cr ion in an amount of from 0.1 to 5,000 ppm by mass, (c) at least one metallic ion selected from Fe, Co, Zn, Mn, Mg, Ca, Sr, Al, Sn, Ce, Mo, W, Nb, Y and La in an amount of from 1 to 5, 000 ppm by mass, and (d) a compound having at least one amidino group in one molecule in an amount of from 1 to 1,000 ppm by mass, and being an aqueous liquid having pH of from 2.5 to 6;
(2) The surface treating agent for metal as in the item (1), wherein the agent further contains (e) sol of an oxide of a metal selected from Ce, Al, Zr, Ti, Y and Nb in an amount of from 1 to 10,000 ppm by mass in terms of solid content;
(3) The surface treating agent for metal as in the item (1)or (2), wherein the agent further contains (f) a bis(trialkoxysilyl)alkane, in which alkoxy groups contained in one molecule have been hydrolyzed at least partially, in an amount of from 0.1 to 50,000 ppm by mass;
(4) The surface treating agent for metal as in the item (1) to (3), wherein the agent further contains (g) a silane coupling agent containing an amino group in an amount of from 1 to 5,000 ppm by mass;
(5) A surface treating method for a metal surface, containing: immersing a metal in a bath of the surface treating agent for metal as in one of the items (1) to (4) at 25 to 60 °C for 1 to 300 seconds; then washing with water; and drying; and
(6) A surface treating method for a metal surface, containing: washing with an acid a surface of a metal to be treated; then washing with water; and thereafter subjecting the metal to the treating method as in the item (9).

According to the present invention, a specific surface-treated film is formed on a surface of an aluminum die-cast member, whereby high antirust property and coating adhesion property can be realized without the use of highly toxic hexavalent chromate having been used conventionally.

### [Best Mode for carrying out the Invention]

The surface treating agent for metal of the present invention contains (a) a fluorine compound of at least one metal selected from Zr, Ti and Hf in an amount of from 1 to 5,000 ppm by mass in terms of metallic ion, (b) a trivalent Cr ion in an amount of from 0.1 to 5,000 ppm by mass, (c) at least one metallic ion selected from Fe, Co, Zn, Mn, Mg, Ca, Sr, Al, Sn, Ce, Mo, W, Nb, Y and La in an amount of from 1 to 5,000 ppm by mass, and (d) a compound having at least one amidino group in one molecule in an amount of from 1 to 1,000 ppm by mass, and has pH of from 2.5 to 6.

The surface treating agent for metal of the present invention contains (a) a fluorine compound of at least one metal selected from Zr, Ti and Hf. The metallic ions are deposited as a hydroxide or an oxide to form a dense film on a surface of a metal to be treated, upon etching the metal to be treated in an aqueous solution to increase pH on the cathode site, whereby an antirust effect is exhibited. Accordingly, the deposited film of the metals constitutes a major component of the antirust film formed with the surface treating agent of the present invention on the surface of the metal to be treated. The metals are added as a fluorine compound from the standpoint of enhancing water-solubility of the metals.
Examples of a compound as a Zr ion source include zirconium hydrofluoric acid, lithium, sodium, potassium and ammonium salts of fluorozirconium acid, and the like.
Examples of a compound as a Ti ion source include titanium hydrofluoric acid, titanium ammonium fluoride and the like, and examples of a compound as a Hf ion source include hafnium hydrofluoric acid, lithium, sodium, potassium and ammonium salts of fluorohafnium acid, and the like.
The content of the metallic ion of the fluorine compound of at least one metal selected from Zr, Ti and Hf is selected from a range of from 1 to 5,000 ppm by mass, preferably from 10 to 3,000 ppm by mass, and more preferably from 15 to 2,000 ppm by mass, in view of balance between the antirust property and the economical efficiency, and the like.

The surface treating agent for metal of the present invention contains (b) a trivalent Cr ion. The trivalent Cr ion is deposited along with the at least one of Zr, Ti and Hf (a) upon surface treatment, or incorporated into the oxide film of Zr, Ti and the like as a composite oxide, whereby the antirust effect is exhibited.
Examples of a compound as a trivalent Cr ion source include a salt of an inorganic acid, such as sulfuric acid, nitric acid, phosphoric acid, hydrofluoric acid and the like, a salt of an organic acid, such as acetic acid formic acid, and the like. A material formed by reducing a hexavalent Cr ion with formaldehyde, phosphorous acid, sodium hydrosulfite and the like may also be used.
The content of the trivalent Cr ion is selected from a range of from 0.1 to 5,000 ppm by mass, preferably from 1 to 3,000 ppm by mass, and more preferably from 5 to 1,500 ppm by mass, in view of the same factors as in the Zr ion and the like.

The surface treating agent of the present invention contains (c) at least one metallic ion selected from Fe, Co, Zn, Mn, Mg, Ca, Sr, Al, Sn, Ce, Mo, W, Nb, Y and La. The metallic ions have such a function that they are incorporated into a film to stabilize the film chemically as one of the film constituting elements, and are reacted with or adsorbed to the base surface of the metal to be treated to contribute to enhancement of the antirust property.
A compound as a source of the metallic ions of the component (c) is not particularly limited, and may be a compound that has water-solubility in a range of pH 2. 5 to 6, and examples thereof include an inorganic acid salt, such as a nitrate salt, a sulfate salt, a carbonate salt, a halide and the like, an organic acid salt, an oxo acid, an oxo acid salt, a complex salt, and the like.
The metallic ions of the component (c) are added for further enhancing the antirust property, and ions of Co, Al, Zn, Mn, Mo, W and Ce are preferred, with a Co ion being particularly preferred, in view of the advantages thereof and the economical efficiency. The content of the metallic ions of the component (c) is selected from a range of from 1 to 5, 000 ppm by mass, preferably from 1 to 3,000 ppm by mass, and more preferably from 10 to 1,000 ppm by mass, in view of the enhancement of the antirust property, the prevention of formation of precipitate, the economical efficiency and the like.

The surface treating agent of the present invention contains (d) a compound having at least one amidino group in one molecule. The amidino group-containing compound contributes to enhancement of the antirust property.
The compound having at least one amidino group in one molecule as the component (d) is not particularly limited, and may be a compound having at least one amidino group represented by the following formula:

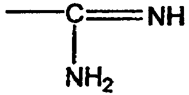

Examples thereof include acetamidine, nitroguanidine, guanylthiourea, guanine, an acetate salt of polyhexamethylene guanidine, o-tolyldiguanide, diguanide, guanylurea, guanylic acid, guanine, guanosine, guanazine, guanamine, alanocyamine, dicyanamide, an amidine compound and the like.
The amidino group-containing compound may be used solely or in combination of two or more of them.
The content of the amidino group-containing compound (d) is selected from a range of from 1 to 1,000 ppm by mass, preferably from 5 to 700 ppm by mass, and more preferably from 10 to 400 ppm by mass, in view of balance between the antirust property and the economical efficiency, and the like.

The surface treating agent of the present invention necessarily has pH in a range of from 2.5 to 6. In the case where pH is 2.5 or more, an aluminum die-cast member to be treated can be suppressed from being excessively corroded, and in the case where it is 6 or less, precipitate can be suppressed from being formed in the surface treating agent. The pH is preferably from 3.0 to 5.5, and more preferably from 3.5 to 5.0.

The surface treating agent of the present invention may further contain the following components, in addition to the aforementioned components, for further enhancing the temporary corrosion resistance property and the coating adhesion property.

The surface treating agent of the present invention may further contain (e) sol of an oxide of a metal selected from Ce, Al, Zr, Ti, Y and Nb.
Examples of the metallic oxide sol of the component (e) include zirconia sol, alumina sol, titanium oxide sol, ceria sol, yttria sol, niobium oxide sol and the like.
The metallic oxide sol is in the form of fine particles in nanometer order and thus gradually releases a metallic ion under a corrosive environment, whereby such an effect is exerted that the metallic ion reaches the corroded part to retard progress of corrosion.
The content of the metallic oxide sol (e) is selected from a range of from 1 to 10,000 ppm by mass, preferably from 5 to 5,000 ppm by mass, and more preferably from 10 to 3,000 ppm by mass, in view of balance between the enhancement effect of the antirust property and the economical efficiency, and the like.

The surface treating agent of the present invention may further contain (f) a bis(trialkoxysilyl)alkane, in which alkoxy groups contained in one molecule have been hydrolyzed at least partially.
As the bis(trialkoxysilyl)alkane, a compound represented by the general formula (I) is preferably used:

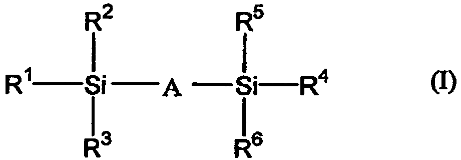

wherein R¹ to R⁶ each independently represent an alkoxy group having 1 to 4 carbon atoms, and A represents a methylene group or an ethylene group.
In the general formula (I), examples of the alkoxy group having 1 to 4 carbon atoms represented by R¹ to R⁶ include a methoxy group, an ethoxy group, a n-propoxy group, an isopropoxy group and various kinds of butoxy groups.
Examples of the bis(trialkoxysilyl)alkane include bis(trimethoxysilyl)methane, bis(triethoxysilyl)methane, bis(tri-n-propoxysilyl)methane, bis(triisopropoxysilyl)methane, 1,2-bis(trimethoxysilyl)ethane, 1,2-bis(triethoxysilyl)ethane, 1,2-bis(tri-n-propoxysilyl)ethane, 1,2-bis(triisopropoxysilyl)ethane and the like. These may be used solely or in combination of two or more of them.
The bis(trialkoxysilyl)alkane, in which alkoxy groups contained in one molecule have been hydrolyzed at least partially, can be obtained, for example, by a bis(trialkoxysilyl)alkane is hydrolyzed in the presence of an acid, such as acetic acid, nitric acid, hydrochloric acid, sulfuric acid and the like, at about 0 to 60°C. A crosslinked silane coupling agent is present in the film through the hydrolysis, whereby the water permeability and the ion permeability of the surface-treated film are suppressed, and thus the corrosion resistance thereof is improved.
The content of the bis(trialkoxysilyl)alkane, in which alkoxy groups contained in one molecule have been hydrolyzed at least partially, is selected from a range of from 0.1 to 50,000 ppm by mass, preferably from 1 to 10,000 ppm by mass, and more preferably from 5 to 5,000 ppm by mass.

The surface treating agent of the present invention may further contain (g) a silane coupling agent containing an amino group.
Examples of the amino group-containing silane coupling agent of the component (g) include N-(2-aminoethyl)-3-aminopropylmethyldimethoxysilane, N-(2-aminoethyl)-3-aminopropyltrimethoxysilane, N-(2-aminoethyl)-3-aminopropyltriethoxysilane, 3-aminopropyltriethoxysilane, 3-aminopropyltrimethoxysilane, 3-triethoxysilyl-N-(1,3-dimethylbutylidene)propylamine, N-phenyl-3-aminopropyltrimethoxysilane, N,N-bis(3-(trimethoxysilyl)propyl)ethylenediamine and the like.
The amino group-containing silane coupling agent has such a function that the coating adhesion property is particularly enhanced to improve the corrosion resistance after coating.
The content of the amino group-containing silane coupling agent (g) is selected from a range of from 1 to 5,000 ppm by mass, preferably from 5 to 3, 000 ppm by mass, and more preferably from 10 to 1, 000 ppm by mass, in view of maintenance of the antirust property and the like.

The surface treating agent further containing at least one of the component (e) and (g) also necessarily has pH of from 2.5 to 6.
Examples of a pH adjusting agent, which is used herein depending on necessity, include an inorganic acid, such as nitric acid, sulfuric acid, phosphoric acid, hydrochloric acid, hydrofluoric acid and the like, and an organic acid, such as acetic acid, formic acid and the like.

A surface treatment according the surface treating method of the present invention can be carried out in the following manner.
A surface of an aluminum alloy or an aluminum die-cast member is subjected to a film forming treatment by using the surface treating agent of the present invention in such a manner as a dipping method, a spraying method, a roll coating method and the like. Herein, the treating temperature is preferably in a range of from 5 to 60°C, and the treating time may be from 1 to 300 seconds. In the case where the treating temperature and the treating time are in the aforementioned ranges, an intended film can be favorably formed economically advantageously. The treating temperature is more preferably from 10 to 50°C, and the treating time is preferably from 5 to 180 seconds.
In the case where the surface of the metal to be treated is washed with an acid and then with water, and thereafter the aforementioned surface treatment is carried out, segregated matters of an impurity element on the surface of the aluminum alloy or the aluminum die-cast member can be removed, whereby a homogeneous and dense surface-treated film can be formed on the surface. Furthermore, a potential difference on the surface due to heterogeneous metals, such as the segregated matters, can be removed to improve the corrosion resistance itself.

The surface-treated product of an aluminum alloy or an aluminum die-cast member can be directly subjected electrodeposition coating without drying, and can be coated after a drying treatment in the following manner.
In the drying treatment, it is preferred to use conditions of a temperature of from 20 to 200°C and a period of time of from 5 seconds to 30 minutes from the standpoint of drying the film efficiently. More preferably, the temperature is from 50 to 120°C, and the period of time is from 1 to 30 minutes.
In the surface-treated film of the present invention thus formed, the deposited amount of Zr or Ti as a major constitutional component is generally about from 1 to 300 mg/m², and preferably from 5 to 200 mg/m². (The amount of Zr or Ti in the film can be quantitatively determined by a fluorescent X-ray spectroscopy.)
According to the surface treating method of the present invention, a surface-treated film having both high temporary corrosion resistance property and coating adhesion property can be formed on a surface of an aluminum die-cast member, without inclusion of hexavalent chromium having strong toxicity, which has been conventionally used.

### [Example]

The present invention will be described in more detail below with reference to examples, but the present invention is not limited to the examples in any way.
A surface-treated aluminum die-cast plate (plate for evaluation) obtained in each example was evaluated for capabilities in the following manners.

### (1) Temporary corrosion resistance property

A plate for evaluation was subjected as it was subjected to a salt water spraying test (SST), and a rust developing area ratio after lapsing 120 hours was visually measured and evaluated by the following standard.
5: rust developing area ratio of 2% or less
4: rust developing area ratio exceeding 2% and 5% or less
3: rust developing area ratio exceeding 5% and 30% or less
2: rust developing area ratio exceeding 30% and 60% or less
1: rust developing area ratio exceeding 60%

### (2) SST after painting

A plate for evaluation was coated in the manner described later to provide a coated plate.

A crosscut grid pattern was formed on the coated plate with a cutter knife, and the plate was subjected to a salt water spraying test (SST). After lapsing 1,000 hours, the blister width of the cut part was measured and evaluated by the following standard.
5: blister width of 2 mm or less
4: blister width exceeding 2 mm and 4 mm or less
3: blister width exceeding 4 mm and 6 mm or less
2: blister width exceeding 6 mm and 8 mm or less
1: blister width exceeding 8 mm

### Production of Coated Plate

A urethane-modified epoxy series solvent type paint, which was used mainly for outboard motors, was spray-coated on the plates for evaluation of Examples 1 to 9 and 13 to a dry thickness of about 20 µm, and dried by baking at 120°C for 20 minutes. In Example 10, Power Bind (produced by Nippon Paint Co., Ltd.) was coated as a primer and baked at 170°C for 20 minutes to a thickness of 25 µm, and then Superlaq (produced by Nippon Paint Co., Ltd.) was coated and baked at 160°C for 20 minutes to a thickness of 20 µm. In Example 11, a cationic electrodeposition paint, Powernics (produced by Nippon Paint Co., Ltd.) was coated and baked at 170°C for 30 minutes to a thickness of 20 µm. In Example 12, a powder paint, Powdax (produced by Nippon Paint Co., Ltd.) was coated and baked at 180°C for 20 minutes to a thickness of 60 µm.

### Example 1

A commercially available aluminum die-cast plate ("ADC-12" produced by Nippon Testpanel Co., Ltd.) was degreased with an alkali cleaner ("Surfcleaner 53", produced by Nippon Paint Co. , Ltd.) at 50°C for 2 minutes, and then washed with water.
The plate was then immersed in a surface treating agent containing 100 ppm by mass of Zr ion, 120 ppm by mass of Cr³⁺ ion, 50 ppm by mass of Co ion, 150 ppm by mass of Al ion and 50 ppm by mass of diguanide (with no abnormal liquid appearance) at 45°C for 2 minutes, and then washed with warm water, followed by air-drying, to produce a surface-treated aluminum die-cast plate (plate for evaluation). The results of evaluation of capabilities of the plate for evaluation are shown in Table 1.

### Examples 2 to 12 and Comparative Examples 1 to 3

The commercially available aluminum die-cast plate was surface-treated by using the surface treating agents shown in Table 1 in the same manner as in Example 1 to produce surface-treated aluminum die-cast plates (plates for evaluation).
The results of evaluation of capabilities of the plates for evaluation are shown in Table 1.
In Comparative Example 1, the surface treating agent had pH outside the scope of the present invention, and thus the treating liquid itself suffered white precipitation, whereby the surface treatment could not be carried out.
In Comparative Example 2, the corrosion resistance was defective since the Cr³⁺ concentration was too low.
In Comparative Example 3, the corrosion resistance was defective since pH of the surface treating agent was too low.

### Example 13

Before treating by the treating method disclosed in Example 1, the metal to be treated was washed with a commercially available acid treating agent (NP Conditioner 950, produced by Nippon Paint Co., Ltd.) at 50°C for 60 seconds and then washed with water.
The results of evaluation of capabilities of the plate for evaluation are shown in Table 1.

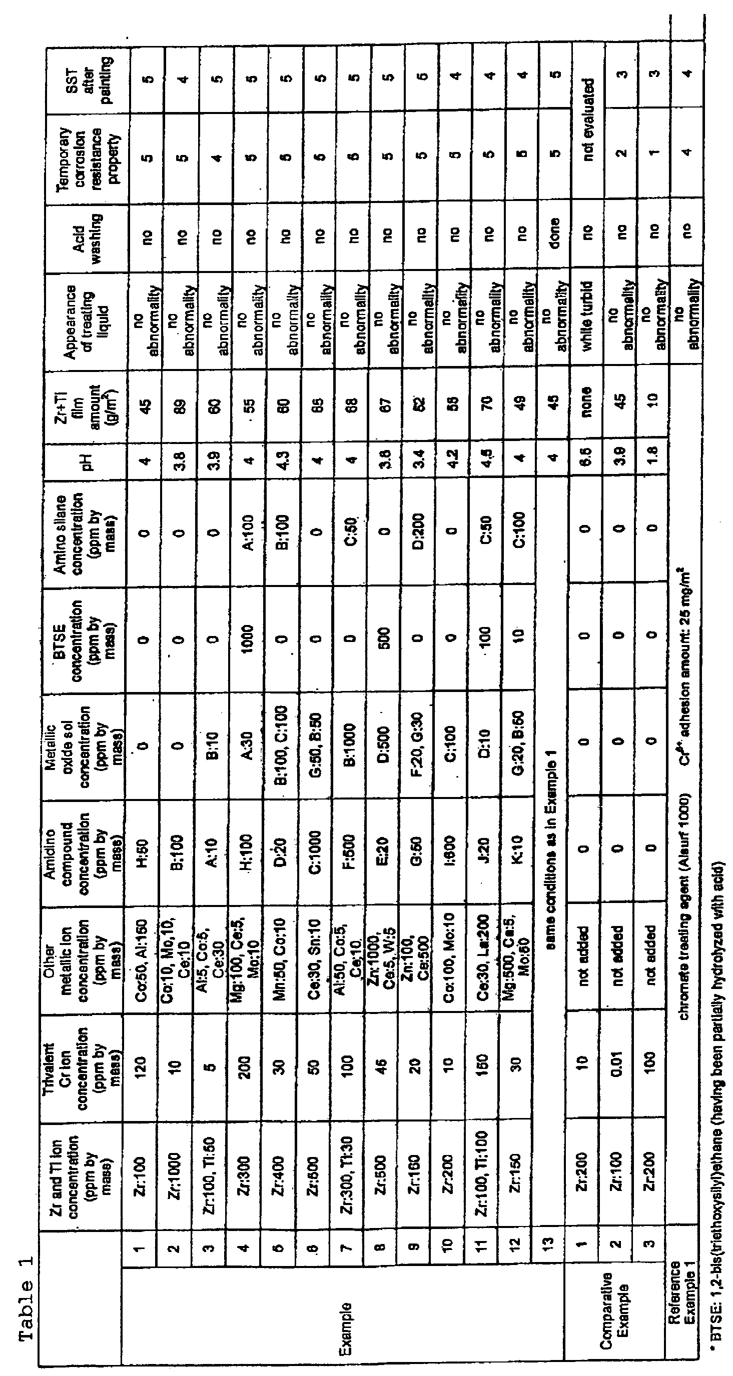

Note
Amidino Compound
   A: acetamidine
   B: nitroguanidine
   C: guanylthiourea
   D: guanine
   E: guanylic acid
   F: acetate salt of polyhexamethylene guanidine
   G: o-tolyldiguanide
   H: diguanide
   I: guanylurea
   J: guanazine
Oxide Sol
   A: titania sol
   B: ceria sol
   C: alumina sol
   D: yttria sol
   E: zirconia sol
   F: niobium oxide sol
   G: silica sol
Aminosilane
   A: γ-aminopropyltriethoxysilane
   B: γ-aminopropyltrimethoxysilane
   C: N-(2-aminoethyl)-3-aminopropyltrimethoxysilane
   D: N-(2-aminoethyl)-3-aminopropyltriethoxysilane

### Reference Example 1

A degreased aluminum die-cast plate was obtained in the same manner as in Example 1. The aluminum die-cast plate was surface-treated with a hexavalent chromate treating agent (Alsurf 1000, produced by Nippon Paint Co., Ltd.) at 40°C for 30 seconds to a chromium attached amount of 25 mg/m² to produce a surface-treated aluminum die-cast plate (plate for evaluation).
Upon evaluation of capabilities of the plate for evaluation, the temporary corrosion resistance property was 4, and the SST after painting was 4.
All the surface-treated aluminum die-cast plates obtained in the examples had such capabilities that were equivalent to the hexavalent chromate-treated aluminum die-cast plate.

### [Industrial Applicability]

According to the surface treating method of the present invention, a surface-treated film having both high temporary corrosion resistance property and coating adhesion property can be formed on a surface of an aluminum die-cast member, without inclusion of hexavalent chromium having strong toxicity, which has been conventionally used.

## Claims

1. A surface treating agent for metal;
comprising
(a) a fluorine compound of at least one metal selected from Zr, Ti and Hf in an amount of from 1 to 5,000 ppm by mass in terms of metallic ion,
(b) a trivalent Cr ion in an amount of from 0.1 to 5,000 ppm by mass,
(c) at least one metallic ion selected from Fe, Co, Zn, Mn, Mg, Ca, Sr, Al, Sn, Ce, Mo, W, Nb, Y and La in an amount of from 1 to 5,000 ppm by mass, and
(d) a compound having at least one amidino group in one molecule in an amount of from 1 to 1,000 ppm by mass; and
being an aqueous liquid having pH of from 2.5 to 6.

2. The surface treating agent for metal according to claim 1, wherein the agent further comprises (e) sol of an oxide of a metal selected from Ce, Al, Zr, Ti, Y and Nb in an amount of from 1 to 10,000 ppm by mass in terms of solid content.

3. The surface treating agent for metal according to claim 1 or 2, wherein the agent further comprises (f) a bis(trialkoxysilyl)alkane, in which alkoxy groups contained in one molecule have been hydrolyzed at least partially, in an amount of from 0.1 to 50,000 ppm by mass.

4. The surface treating agent for metal according to any of claims 1 to 3, wherein the agent further comprises (g) a silane coupling agent containing an amino group in an amount of from 1 to 5,000 ppm by mass.

5. A surface treating method for a metal surface, comprising: immersing a metal in a bath of the surface treating agent for metal according to one of the claims 1 to 4 at 25 to 60°C for 1 to 300 seconds; then washing with water; and drying.

6. A surface treating method for a metal surface, comprising: washing with an acid a surface of a metal to be treated; then washing with water; and thereafter subjecting the metal to the treating method according to claim 5.

## Patentansprüche

1. Oberflächen-Behandlungsmittel für Metall, das
(a) eine Fluorverbindung mindestens eines Metalls, das ausgewählt wird aus Zr, Ti und Hf, in einer Menge von 1 bis 5.000 ppm nach Gewicht als Metallion,
(b) ein trivalentes Cr-Ion in einer Menge von 0,1 bis 5.000 ppm nach Gewicht,
(c) mindestens ein metallisches Ion, ausgewählt aus Fe, Co, Zn, Mn, Mg, Ca, Sr, Al, Sn, Ce, Mo, W, Nb, Y und La, in einer Menge von 1 bis 5.000 ppm nach Gewicht, und
(d) eine Verbindung mit mindestens einer Amidinogruppe in einem Molekül in einer Menge von 1 bis 1.000 ppm nach Gewicht; umfasst und
das eine wässrige Flüssigkeit mit einem pH von 2,5 bis 6 ist.

2. Oberflächen-Behandlungsmittel für Metall nach Anspruch 1, wobei das Mittel darüber hinaus (e) ein Sol eines Oxids eines Metalls, ausgewählt aus Ce, Al, Zr, Ti, Y und Nb, in einer Menge von 1 bis 10.000 ppm nach Gewicht als Feststoffgehalt umfasst,

3. Oberflächen-Behandlungsmittel für Metall nach Anspruch 1 oder 2, wobei das Mittel darüber hinaus (f) ein Bis(trialkoxysllyl)alkan umfasst, wobei die in einem Molekül enthaltenen Alkoxygruppen mindestens teilweise hydrolysiert wurden, in einer Menge von 0,1 bis 50.000 ppm nach Gewicht.

4. Oberflächen-Behandlungsmlttel für Metall nach einem der Ansprüche 1 bis 3, wobei das Mittel darüber hinaus (g) ein Silankupplungsmittel umfasst, das eine Aminogruppe enthält, in einer Menge von 1 bis 5.000 ppm nach Gewicht.

5. Oberflächen-Behandlungsverfahren für eine Metalloberfläche, umfassend: Eintauchen eines Metalls in ein Bad aus dem Oberflächen-Behandlungsmittel für Metall nach einem der Ansprüche 1 bis 4 bei 25 bis 60°C während 1 bis 300 Sekunden; dann Waschen mit Wasser; und Trocknen.

6. Oberflächen-Behandlungsverfahren für eine Metalloberfläche, umfassend: Waschen einer Oberfläche eines zu behandelnden Metalls mit einer Säure; dann Waschen mit Wasser; und anschlieβend Durchführen der Behandlungsmethode nach Anspruch 5 mit dem Metall.

## Revendications

1. Agent de traitement de surface pour métaux ;
comprenant
(a) un composé de fluor d'au moins un métal sélectionné parmi Zr, Ti et Hf en une quantité de 1 à 5000 ppm en masse relatif au ion métallique,
(b) un ion Cr trivalent en une quantité de 0,1 à 5000 ppm en masse,
(c) au moins un ion métallique sélectionné parmi Fe, Co, Zn, Mn, Mg, Ca, Sr, Al, Sn, Ce, Mo, W, Nb, Y et La en une quantité de 1 à 5000 ppm en masse, et
(d) un composé ayant au moins un groupe amidino dans une molécule en une quantité de 1 à 1000 ppm en masse ; et
étant un liquide ayant un pH de 2,5 à 6.

2. Agent de traitement de surface pour métaux selon la revendication 1, dans lequel l'agent comprend (e) un sol d'un oxyde d'un métal sélectionné parmi Ce, Al, Zr, Ti, Y et Nb en une quantité de 1 à 10000 ppm en masse relatif à la teneur en solides.

3. Agent de traitement de surface pour métaux selon la revendication 1 ou 2, dans lequel l'agent comprend en outre (f) un bis(trialkoxysilyle)alkane, dans lequel des groupes alkoxy contenus dans une molécule ont été hydrolysés au moins partiellement, en une quantité de 0,1 à 50000 ppm en masse.

4. Méthode de traitement d'une surface métallique selon l'une des revendications 1 à 3, dans lequel l'agent comprend en outre (g) un agent de couplage silanique contenant un groupe amino en une quantité de 1 à 5000 ppm en masse.

5. Méthode de traitement d'une surface pour une surface métallique comprenant :
l'étape d'immerger un métal dans un bain de l'agent de traitement de surface pour métaux selon l'une des revendications 1 à 4 à 25 jusqu'à 60 °C pour 1 à 300 secondes ; ensuite l'étape de laver avec de l'eau ; et de sécher.

6. Méthode de traitement d'une surface pour une surface métallique comprenant :
l'étape de laver avec un acide une surface d'un métal à traiter; ensuite l'étape de laver avec de l'eau ; et après l'étape de soumettre le métal à traiter à la méthode selon la revendication 5.
